# EUROPEAN PATENT SPECIFICATION

(11) **EP 0 526 741 B1**
(45) Date of publication and mention of the grant of the patent: **04.10.1995**
(21) Application number: 92111221.5
(22) Date of filing: 02.07.1992
(51) Int. Cl.: B01J 19/18, B01J 19/24, B01J 19/00, C08F 2/18, C08F 14/06

(54) **Reactor system for suspension polymerisation of vinyl chloride**
Reaktorsystem für die Suspensionspolymerisation von Vinyl-Chlorid
Système de réacteur pour la polymérisation en suspension au chlorure de vinyle

(30) Priority: 05.07.1991 JP 191032/91
(43) Date of publication of application: 10.02.1993
(73) Proprietor: SHIN-ETSU CHEMICAL CO., LTD., Chiyoda-ku Tokyo (JP)
(72) Inventor: Amano, Tadashi, Kashima-gun, Ibaraki-ken (JP); Ohnishi, Shuji, Kashima-gun, Ibaraki-ken (JP)
(74) Representative: Jaeger, Klaus, Dr.

(56) References cited:
- EP-A- 0 402 662
- FR-A- 2 457 304
- PATENT ABSTRACTS OF JAPAN vol. 11, no. 295 (M-626)24 September 1985
- PATENT ABSTRACTS OF JAPAN vol. 12, no. 145 (M-693)6 May 1988

## Description

### BACKGROUND OF THE INVENTION

The present invention relates to an improvement in a reactor system for the suspension polymerization of vinyl chloride monomer or a monomer mixture mainly consisting of vinyl chloride in an aqueous polymerization medium to produce a polyvinyl chloride resin. More particularly, the invention relates to an improvement in a reactor system for the suspension polymerization of vinyl chloride monomer comprising an external heat exchanger connected to the reactor by a piping for circulating the polymerization mixture from the bottom of the reactor to the upper part thereof through the said heat exchanger by means of a pump.

It is well known and generally understood that one of the important problems encountered in the suspension polymerization of vinyl chloride monomer in an aqueous medium contained in a polymerisation reactor is the efficiency of heat exchange for quickly increasing the temperature of the polymerization mixture up to the polymerization temperature and efficient removal of the heat of polymerisation in order to keep the temperature of the polymerization mixture within a narrow range. Namely, a conventional procedure for the suspension polymerisation of vinyl chloride monomer is conducted by introducing water as the suspension medium, the monomer, polymerisation initiator, suspending agent and other optional additives into a polymerization reactor equipped with a jacket for passing hot water for heating or cold water for heat removal from the polymerization mixture and a reflux condenser for heat removal. Once the temperature of the polymerization mixture has reached a specified polymerization temperature and the polymerization reaction is started, the temperature thereof is controlled at the specified polymerization temperature by removing the heat of polymerisation by means of the jacket and the reflux condenser.

It is a remarkable trend in recent years in such a process of polymerization that the process is conducted by using a polymerization reactor of a larger and larger capacity in order to enhance the productivity. An increase in the capacity of the reactor necessarily leads to a decrease in the area available for heat removal throught the jacket relative to the volume of the reactor or the polymerization mixture. In order to compensate for the deficiency in the capacity of heat removal through the jacket, it is usual that a reflux condenser having a larger cooling capacity is installed to the reactor or, alternatively, the water passing through the jacket is chilled by means of an additionally installed chilling means so as to increase the efficiency of heat removal.

The former means by increasing the capacity of the reflux condenser has a limitation due to a very difficult problem. When the rate of evaporation from the polymerization mixture and hence the rate of refluxing are increased by the increased capacity of the condenser, namely, violent foaming is unavoidably caused on the polymerization mixture eventually to carry over the liquid mixture so that heavy deposition of polymer scale takes place on all over the surface of the reactor and even inside of the reflux condenser resulting in a decrease in the cooling capacity or degradation of the product quality due to an increase in the amount of fish eyes. When such a large reflux condenser is brought into operation, in particular, at the beginning stage of the polymerization reaction, an adverse influence is caused on the particle size distribution of the resin product to contain coarser particles.

The latter means of chilling the cooling water is economically not practical due to the great costs required for installing and running the refrigerating machine. The efficiency of this means is still lower when the polymerization reaction is conducted for the production of a polyvinyl chloride resin having a relatively high average degree of polymerization for which the polymerization temperature must be decreased resulting in a decreased difference between the polymerization temperature and the temperature of the cooling water which can rarely be lower than 30°C when the cooling water is recirculated through the jacket.

As an alternative means of the above described prior art methods, a proposal has been made in Japanese Patent Kokai No. 54-24991, No. 56-47410 and No. 58-32606 and Japanese Patent Publication No. 64-11642 to provide an external heat exchanger or a cooling means which is connected to the reactor with a piping so as to circulate the polymerization mixture using a pump, typically, from the bottom of and to the upper part of the polymerization reactor through the heat exchanger where the polymerization mixture is cooled. The method using such a reactor system is indeed very effective if the matter is merely to increase the cooling capacity. A serious problem unavoidable in this method, however, is the deposition of polymer scale on the inner walls of the circulation system of the polymerization mixture resulting in a decrease in the cooling capacity and adverse influences on the quality of the resin product. These drawbacks can be avoided by starting running of the external cooling system only at a moment when the monomer conversion into polymer has exceeded a certain limit or by using an external cooling system of a special type with large costs.

### SUMMARY OF THE INVENTION

The present invention accordingly has an object to provide an improvement in a polymerization reactor system for the suspension polymerization of vinyl chloride monomer or a monomer mixture mainly consisting of vinyl chloride in an aqueous medium to solve the above described problems in the prior art reactor systems having an external heat exchanger.

Thus, the improvement provided by the invention comprises, in a polymerization reactor system for the suspension polymerization of vinyl chloride or a monomer mixture mainly consisting of vinyl chloride comprising a polymerization reactor, an external heat exchanger, a pipe line connecting the heat exchanger to the lower part and to the upper part of the polymerization reactor to circulate the polymerization mixture through the heat exchanger and a pumping means to circulate the polymerization mixture from the lower part to the upper part of the reactor through the heat exchanger, using, as the pumping means, a pump having an impellor in the form of a single spiral screw blade around a hub having a conical configuration.

### BRIEF DESCRIPTION OF THE DRAWING

Figure 1 is a schematic illustration of the flow diagram of the reactor system.

Figure 2 is an axial cross sectional view of the circulation pump.

### DETAILED DESCRIPTION OF THE PREFERRED EMBODIMENTS

As is described above, the most characteristic feature of the improvement provided by the present invention is the use of a unique and specific pump as defined above as a circulating means in a polymerization reactor system comprising a polymerization reactor and an external heat exchanger connected to the lower part and to the upper part of the reactor by means of a pipe line to circulate the polymerization mixture by means of a circulating pump. The reactor system is effective in preventing polymer scale deposition on the walls of the circulating pipe line to be freed from the problems of a decrease in the cooling capacity and adverse influences on the quality of the resin product.

In the following, the improvement of the invention is described in more detail with reference to the accompanying drawing.

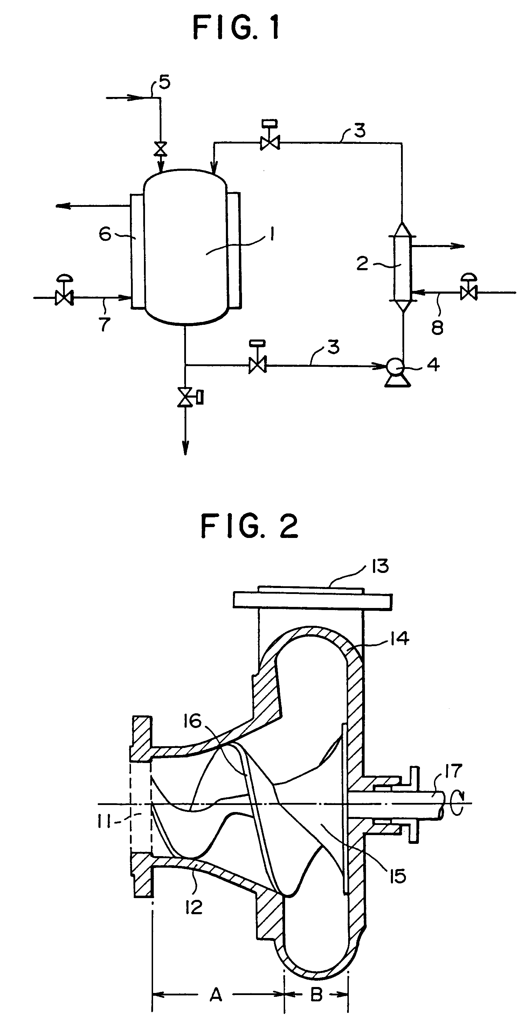

Figure 1 of the drawing is a schematic illustration of the polymerization reactor system, in which the polymerization reactor 1 having a jacket 6 is connected at the bottom to the inlet of a heat exchanger 2 with a pipe line 3 through a circulating pump 4 while the outlet of the heat exchanger 2 is connected with a pipe line 3 to the top of the polymerization reactor 2. The jacket 6 and heat exchanger 2 are provided with pipe lines 7 and 8, respectively, for the supply of a heating or cooling medium. The polymerization mixture contained in the reactor 1 consisting of an aqueous medium, monomer, suspending agent, monomer-soluble polymerization initiator and other optional ingredients introduced into the reactor 1 through the pipe line 5 is circulated from the bottom or lower part of the reactor 1 through the heat exchanger 2, where the polymerization mixture is heated or cooled, to the top or upper part of the reactor 1 by means of the circulating pump 4. Although Figure 1 is depicted in such a fashion that the polymerization mixture circulated through the external heat exchanger 2 by means of the pump 4 is abstracted from the reactor 1 at the bottom and returned to the reactor 1 at the top, the position at which the mixture is abstracted can be somewhat higher than the bottom and the position at which the mixture is returned to the reactor 1 is not limited to the top thereof provided that the position is higher than the position at which the polymerization mixture is abstracted.

According to the investigations of the inventors, the design or structure of the circulating pump 4 is largely responsible for the polymer scale deposition on the walls of the circulating circuit. In such a polymerization reactor system, the aqueous suspension as the polymerization mixture containing monomer droplets and already formed particles of the resin is abstracted from the lower part of the reactor 1 by means of the circulating pump 4 which is, for example, a centrifugal pump for slurry transfer in which the monomer droplets and resin particles are subjected to a strong shearing force by the impellors of the pump 4 so as to be finely comminuted. The thus formed extremely fine resin particles not only are readily deposited on the walls of the circulation circuit as polymer scale but also necessarily enter the resin product to cause degradation of the quality thereof.

Directing their attention to the above mentioned phenomenon of breakdown of the monomer droplets and resin particles, the inventors got an idea that the above described problems could be solved by an appropriate selection of the circulating pump not to cause such breakdown. Accordingly, the inventors have conducted extensive investigations by using various types of conventional pumps including centrifugal pumps, gear pumps, screw pumps and the like. As a result of the investigations, the inventors have reached an unexpected discovery that the problems can be solved by using a pump having a impellor in the form of a single spiral screw blade around a hub having a conical configuration for the circulation of the polymerization mixture through the heat exchanger, which typically has a structure as illustrated in Figure 2 by an axial cross section.

As is illustrated in Figure 2, the pump has a pump casing 12 in the form of a truncated cone having a suction port 11 and a discharge port 13 for the polymerization mixture and a spiral-formed casing is conjoinedly provided to the pump casing 12. The impellor means of the pump consists of a cone-shaped hub 15 rotatable around the shaft 17 and a single impellor blade 16 in the form of a spiral screw blade fixed to the cone-shaped hub 15. The pump as a whole can be divided into a screw-action part A and a centrifuge-action part B. A pump of this type is commercially available in the tradename of, for example, Hydrostal Pump manufactured and sold by Taiheiyo Kinzoku Co.

When the impellor blade 16 is rotating, the impellor blade 16 having a form of a spiral screw in the pump casing 12 acts something like a volume pump while the flow of the polymerization mixture therethrough is not turbulent by virtue of the steady running of the single blade not to cause gas separation by the centrifugal force so that the monomer droplets and resin particles are not comminuted despite the strong suction force. The spiral blade 16 in the pump casing 12 of the form of truncated cone has a diameter increasing toward the casing 14 of the scroll chamber so as to ensure smooth flow of the polymerization mixture along the outer periphery thereof with gradually increasing circumferential velocity. The polymerization mixture can be discharged out of the discharge port 13 at a sufficiently high discharge pressure because the casing 14 of the scroll chamber has an annular form to exhibit a centrifugal force as in centrifugal pumps.

When a pump having the above described characteristics is used as a circulating pump according to the invention, poly-mer scale deposition in the circulating circuit can be effectively avoided as a consequence of effective prevention of breakdown of the monomer droplets and resin particles by the impellor blade so that the efficiency of removal of the heat of polymerization from the polymerization mixture: can be greatly increased or is never decreased even without using a refrigerating machine or other expensive means in addition to the improvement of the quality of the resin product.

The present invention is applicable to the polymerization reactor of any types having a jacket and equipped with a stirrer, reflux condenser, baffle and the like. The type of the stirrer is also not particularly limitative including those of the paddle type, Phaudler type, Bullmargin type, propellor type, turbine blade type and the like as combined, according to need, with one or more of baffles in the form of a plate, cylinder, hairpin coil and the like.

The type of the heat exchanger is also not limited to a specific type but can be any of conventional heat exchangers including those of the multitubular type, coil type, spiral type, trombone cooler type and the like. The heating and cooling media can be steam, hot water, cold water, brine and the like. It is also optional to use a jacketed pipe for the pipe line 3 so as to utilize the space between the double walls of the jacketed pipe as the passage way for the heating or cooling medium.

The heat exchanger 2, pipe line 3 and circulating pump 4 as well as valves and other parts coming into contact with the polymerization mixture should preferably be made of a material having resistance against corrosion and good heat conductivity. Examples of suitable materials include various grades of stainless steels such as the 18-8 austenitic, 13-chromium ferritic, martensitic, 18-chromium ferritic, high-chromium ferritic and binary-phase austenitic-ferritic ones. It is optional that the wall surface of these parts is coated with a scale deposition inhibitor or the polymerization mixture is admixed with a scale deposition inhibitor.

It is important that the heat exchanger 2 and circulating pipe 3 have such an internal structure or are in such an arrangement as to be free from stagnancy of the polymerization mixture flowing therethrough. In this regard, it is preferable that the flowing linear velocity of the polymerization mixture is kept at 0.7 meter/ second or larger at any part of the circulating circuit since otherwise deposition of polymer scale may take place.

The improvement of the present invention can be applied not only to the homopolymerization of vinyl chloride alone but also to the copolymerization of a monomer mixture mainly consisting of vinyl chloride with one or more of comonomers copolymerizable with vinyl chloride provided that the major portion or, for example, 50% by weight or larger of the monomer mixture is vinyl chloride. Examples of the comonomers copolymerizable with vinyl chloride include α-olefins such as ethylene, propylene, 1-butene, 1-pentene, 1-hexene, 1-heptene, 1-octene, 1-nonene, 1-decene, 1-undecene, 1-dodecene, 1-tridecene and 1-tetradecene, acrylic acid and esters thereof such as methyl acrylate and ethyl acrylate, methacrylic acid and esters thereof such as methyl methacrylate, maleic acid and esters thereof, vinyl esters such as vinyl acetate and vinyl propionate, vinyl ethers such as lauryl vinyl ether and isobutyl vinyl ether, maleic anhydride, acrylonitrile, styrene and vinylidene chloride.

The conditions under which the polymerization reaction is conducted to practice the present invention can be conventional including the proportion of the aqueous medium and the monomer, amounts of the dispersing agent and polymerization initiator, method for introducing these materials into the reactor and so on. It is of course optional that the polymerization mixture is admixed according to need with various kinds of additives conventionally used in the suspension polymerization of vinyl chloride such as polymerization regulators, chain transfer agents, pH controlling agents, gelation improvers, antistatic agents, crosslinking agents, stabilizers, fillers, antioxidants, buffering agents, scale deposition inhibitors and the like.

In the following, the improvement obtained by the present invention is described in more detail by way of examples and comparative examples which, however, never limit the scope of the invention in any way.

### Example 1.

A stainless steel autoclave with a jacket having a capacity of 2.1 m³ was connected to a shell-and-tube type multitubular heat exchanger of which the heat transfer area was 5.0 m² wide through a Hydrostal Pump of 24 m³/hour capacity at 7.5 meters head having an inverter-controlled variable flow-rate regulator by using pipes and valves to built a circulation circuit illustrated in Figure 1 of the ac-companying drawing.

The polymerization reactor was charged with 840 kg of deionized water and an aqueous solution containing 240 g of a partially saponified polyvinyl alcohol and 160 g of a water-soluble cellulose ether as a dispersing agent to form a polymerization medium. After evacuation of the reactor down to a reduced pressure of 50 mmHg, 670 kg of vinyl chloride monomer were introduced into the polymerization medium under agitation followed by the introduction of 2010 g of di-2-ethylhexylperoxy dicarbonate as a polymerization initiator under pressurization thus to form a polymerization mixture. Along with the start of the circulating pump leading to the heat exchanger, hot water was passed through the jacket and the heat exchanger so as to increase the temperature of the polymerization mixture up to the polymerization temperature of 55 °C so that the polymerization reaction was started. Immediately after the start of the polymerization reaction, cooling water was passed through the jacket of the reactor to control the temperature of the polymerization mixture. Circulation of the polymerization mixture through the heat exchanger was started at a rate of 390 liters/minute so that the linear velocity of the mixture through the heat exchanger was 1.2 meters/second. Thereafter, the hot water passing through the heat exchanger was switched to cooling water at a temperature of 30 °C at a flow rate of 10 m³/hour to continue the polymerization reaction at the same temperature while the temperature of the cooling water passing through the jacket of the reactor was controlled as the polymerization reaction proceeds with the lowest temperature of 40 °C. When the pressure inside of the reactor had dropped to 6.5 kg/cm²G taking 2 hours and 50 minutes, the unreacted monomer was purged out of the reactor and recovered to terminate the polymerization reaction. The polymerizate slurry was discharged out of the reactor and dehydrated and dried in a conventional manner to give a dry polyvinyl chloride resin powder.

The circulation circuit was disassembled and the inner walls of the pipes, pump and heat exchanger were inspected to find absolutely no deposition of polymer scale retaining the initial metallic luster of the surface.

The above obtained polyvinyl chloride resin powder was subjected to the tests for the following items in the testing procedures described there to give the results shown in Table 1.

### Bulk density:

Measurement was undertaken according to the procedure specified in JIS K 6721.

### Particle size distribution:

The resin powder was passed through screens of 60 meshes, 80 meshes, 100 meshes, 150 meshes and 200 meshes per inch as specified in JIS Z 8801 and the respective amounts of the resin powder falling through the screens were recorded in % by weight based on the total amount of the resin powder.

### Plasticizer absorption:

A 10 g portion of the resin powder was put into a cylindrical vessel of an aluminum alloy having an inner diameter of 25 mm and depth of 85 mm and bearing a mass of glass fibers on the bottom and then 15 g of dioctyl phthalate were added thereto. After standing for 30 minutes at room temperature as such to cause full absorption of the plasticizer by the resin powder, the cylindrical vessel was subjected to centrifugation at an acceleration of 1500 G so as to separate the unabsorbed plasticizer from the resin powder to record the amount of the absorbed plasticizer in % by weight based on the amount of the dry resin powder.

### Number of fish eyes;

A 50 g portion of a mixture consisting of 100 parts by weight of the resin powder, 50 parts by weight of dioctyl phthalate, 0.5 part by weight of tribasic lead sulfate, 1.5 parts by weight of lead stearate, 0.1 part by weight of titanium dioxide and 0.05 part by weight of carbon black was kneaded for 5 minutes on a 6-inch roller mill at 140 °C and then sheeted into a sheet having a thickness of 0.2 mm and a width of 10 cm, of which the number of translucent spots was counted on an area of 100 cm² and recorded as the number of fish eyes.

### Comparative Example 1.

The procedure was substanitally the same as in Example 1 excepting replacement of the Hydrostal Pump with a conventional centrifugal pump of 24 m³/hour capacity at 15 meters head. The lowest temerature of the cooling water passing through the jacket of the reactor was 36 °C.

A large amount of polymer scale deposition was found by inspection on the inner walls of the pipes, pump and heat exchanger as disassembled and the pipe was near to blocking at a part by the polymer scale deposition. Table 1 below also shows the results of the evaluation tests for the resin powder obtained by this polymerization run.

### Comparative Example 2.

The experimental procedure was just the same as in Comparative Example 1 except that the external heat exchanger was not operated and the lowest temperature of the cooling water passing through the reactor jacket was 30 °C. Due to the insufficient cooling capacity by means of the jacket alone, the temperature of the polymerization mixture could not be controlled at 55 °C but the polymerization reaction was performed at 60 °C at the highest. The polymerization time was 2 hours and 30 minutes. Table 1 below also shows the results of the evaluation tests for the resin powder obtained in this polymerization run.

### Example 2.

Into the polymerization reactor of the same reactor system as used in Example 1 were introduced 978 kg of deionized water and an aqueous solution containing 270 g of a partially saponified polyvinyl alcohol and 270 g of a water-soluble cellulose ether to form an aqueous medium into which, after evacuation down to a reduced pressure of 50 mmHg, 600 kg of vinyl chloride monomer were introduced under agitation and then 1140 g of di-2-ethylhexylperoxy dicarbonate were introduced under pressurization as a polymerization initiator to form a polymerization mixture. Along with the start of the circulating pump leading to the heat exchanger, hot water was passed through the jacket and the heat exchanger so as to increase the temperature of the polymerization mixture up to the polymerization temperature of 39 °C so that the polymerization reaction was started. The rate of circulation of the polymerization mixture through the heat exchanger was 390 liters/minute and the linear velocity of the mixture through the heat exchanger was 1.2 meters/second. Thereafter, the hot water passing through the heat exchanger was switched to cooling water at 30 °C at a flow rate of 10 m³/hour to continue the polymerization reaction at the same temperature while the lowest temperature of the cooling water passing through the jacket of the reactor was 35 °C. When the pressure inside of the reactor had dropped to 4.5 kg/cm²G taking 6 hours and 40 minutes, the unreacted mono-mer was purged out of the reactor and recovered to terminate the polymerization reaction. The polymerizate slurry was discharged out of the reactor and dehydrated and dried in a conventinal manner to give a dry polyvinyl chloride resin powder.

The condition of polymer scale deposition on the inner walls of the pipes, pump and heat exchanger was found as good as in Example 1. Table 1 below also shows the results of the evaluation tests for the resin powder obtained in this polymerization run.

### Comparative Example 3.

The experimental procedure was just the same as in Example 2 except that the circulating pump for circulation of the polymerization mixture through the heat exchanger was not operated. The polymerization time was 6 hours and 20 minutes and the lowest temperature of the cooling water passing through the jacket of the reactor was 30 °C. The temperature of the polymerization mixture could not be controlled at 39 °C but the polymerization re-action was performed at 42 °C due to the deficiency in the cooling capacity by means of the jacket alone. Table 1 below also shows the results of the evaluation tests for the resin powder obtained in this polymerization run.

**Table 1**

| | Example 1 | Example 2 | Comparative Example 1 | Comparative Example 2 | Comparative Example 3 |
|---|---|---|---|---|---|
| Bulk density, g/cm³ | 0.525 | 0.420 | 0.489 | 0.550 | 0.430 |

| Particle size distribution, %, passing through screen of | | | | | |
|---|---|---|---|---|---|
| 60 mesh | 100 | 100 | 96.2 | 100 | 100 |
| 80 mesh | 60.8 | 98.2 | 78.5 | 56.5 | 98.5 |
| 100 mesh | 39.6 | 85.1 | 64.3 | 25.1 | 82.1 |
| 150 mesh | 25.1 | 5.2 | 34.2 | 10.1 | 8.6 |
| 100 mesh | 0.8 | 0.6 | 11.2 | 0.5 | 1.0 |
| Plasticizer absorption, % by weight | 22.7 | 34.5 | 26.8 | 16.3 | 28.9 |
| Number of fish eyes | 20 | 9 | 250 | 150 | 250 |

## Claims

1. A polymerization reactor system for the suspension polymerization of vinyl chloride or a monomer mixture mainly consisting of vinyl chloride comprising a polymerization reactor containing a polymerization mixture, an external heat exchanger, a pipe line connecting the heat exchanger to the lower part and to the upper part of the polymerization reactor to circulate the polymerization mixture through the heat exchanger and a pumping means to circulate the polymerization mixture in the reactor from the lower part to the upper part of the reactor through the heat exchanger, characterized in that the pumping means comprises a pump having an impeller in the form of a single spiral screw blade around a hub having a conical configuration.

## Patentansprüche

1. Polymerisationsreaktorsystem zur Suspensionspolymerisation von Vinylchlorid oder einer Monomermischung im wesentlichen bestehend aus Vinylchlorid mit einem eine Polymerisationsmischung enthaltenden Polymerisationsreaktor, einem äußeren Wärmetauscher, einer Leitung, welche den Wärmetauscher mit dem unteren Abschnitt und dem oberen Abschnitt des Polymerisationsreaktors zur Zirkulation der Polymerisationsmischung durch den Wärmetauscher verbindet, und einem Pumpmittel zum Zirkulieren der Polymerisationsmischung in dem Reaktor von dem unteren Abschnitt zu dem oberen Abschnitt des Reaktors durch den Wärmetauscher,
dadurch **gekennzeichnet,**
daß das Pumpmittel eine Pumpe mit einem Impeller in Form eines einzelnen spiralen Schraubenblattes um eine konisch konfigurierte Nabe aufweist.

## Revendications

1. Système de réacteur de polymérisation destiné à la polymérisation en suspension de chlorure de vinyle ou d'un mélange de monomère constitué principalement de chlorure de vinyle comprenant un réacteur de polymérisation contenant un mélange de polymérisation, un échangeur de chaleur externe, une conduite raccordant l'échangeur de chaleur à la partie inférieure et à la partie supérieure du réacteur de polymérisation pour faire circuler le mélange de polymérisation à travers l'échangeur de chaleur et des moyens de pompage pour faire circuler le mélange de polymérisation dans le réacteur de la partie inférieure à la partie supérieure du réacteur à travers l'échangeur de chaleur, caractérisé en ce que les moyens de pompage comprennent une pompe comportant une hélice sous forme d'une seule pale d'hélice en spirale autour d'un moyeu présentant une configuration conique.
